# EUROPÄISCHE PATENTANMELDUNG

(11) **EP 2 735 757 A1**
(43) Veröffentlichungstag der Anmeldung: **28.05.2014**
(21) Anmeldenummer: 13192307.0
(22) Anmeldetag: 11.11.2013
(51) Int. Cl.: F16F 7/12, B60R 19/34

(54) **Vorrichtung mit einstellbarer Steifigkeit zum Aufnehmen einer Aufprallenergie und Verfahren zum Einstellen einer Steifigkeit einer Vorrichtung mit einstellbarer Steifigkeit**

(30) Priorität: 23.11.2012 DE 102012221429
(71) Anmelder: ROBERT BOSCH GMBH, 70442 Stuttgart (DE)
(72) Erfinder: Loosen, Stephan, 74395 Mundelsheim (DE); Wolkenstein, Maja, 74343 Sachsenheim (DE); Derhardt, Steffen, 70839 Gerlingen (DE); Holz, Dieter, 71563 Affalterbach (DE); Katzschmann, Martin, 04703 Bockelwitz (DE)

(57) **Zusammenfassung**

Es wird eine Vorrichtung (550) mit einstellbarer Steifigkeit zum Aufnehmen einer Aufprallenergie vorgestellt. Dabei weist die Vorrichtung (550) eine Matrize (620) zum Aufnehmen und Deformieren eines Deformationselements (610) bei einer Bewegung des Deformationselements (610) in einer durch die Aufprallenergie bedingten Vorschubrichtung (680) auf. Die Vorrichtung (550) weist eine Energieabsorptionseinrichtung (630) zum Aufnehmen einer Aufprallenergie mit einem ersten Energiebetrag auf, der größer als ein zweiter Energiebetrag der Aufprallenergie ist, bei dem das Deformationselement (610) durch die Matrize (620) deformierbar ist. Auch weist die Vorrichtung (550) eine Betätigungseinrichtung (640) auf, die ausgebildet ist, um in Abhängigkeit von dem Energiebetrag der Aufprallenergie eine Bewegbarkeit der Energieabsorptionseinrichtung (630) relativ zu der Matrize (620) einzustellen, um das Deformationselement (610) und/oder die Energieabsorptionseinrichtung (630) zum Aufnehmen der Aufprallenergie freizugeben.

## Beschreibung

### Stand der Technik

Die vorliegende Erfindung bezieht sich auf eine Vorrichtung mit einstellbarer Steifigkeit zum Aufnehmen einer Aufprallenergie, ein Verfahren zum Einstellen einer Steifigkeit einer derartigen Vorrichtung, auf ein entsprechendes Steuergerät sowie auf ein entsprechendes Computerprogrammprodukt für einen Einsatz in Fahrzeugen.

Zum Schutz von Fahrzeuginsassen und Fußgängern bei Kollisionen werden häufig Crashboxen bzw. Aufprallstrukturen eingesetzt. Diese Strukturen werden im Vorderwagen und/oder im Heck eines Fahrzeugs verbaut und können nach einem Unfall ausgetauscht werden.

Die EP 1 792 786 A2 zeigt eine Crashbox zur Eingliederung zwischen einem Stoßfängerquerträger und einem Fahrzeuglängsträger eines Kraftfahrzeugs. Die Crashbox weist ein gehäuseartiges Deformationsprofil als Faltkonstruktion aus Metallblech und eine längsträgerseitige Flanschplatte auf.

### Offenbarung der Erfindung

Vor diesem Hintergrund werden mit der vorliegenden Erfindung eine Vorrichtung mit einstellbarer Steifigkeit zum Aufnehmen einer Aufprallenergie, ein Verfahren zum Einstellen einer Steifigkeit einer Vorrichtung mit einstellbarer Steifigkeit, weiterhin ein Steuergerät, das dieses Verfahren verwendet, sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Gemäß Ausführungsformen der vorliegenden Erfindung können vorteilhafte Möglichkeiten zur Einstellung verschiedener bzw. stark abweichender Kraftniveaus für eine Energieabsorption in Fahrzeugstrukturen bereitgestellt werden. Häufig weisen Lastpfade in Fahrzeugkarosserien Steifigkeitssprünge auf, wobei diese Sprünge oft an Bauteilgrenzen auftreten. Gemäß Ausführungsformen der vorliegenden Erfindung ist beispielsweise eine Vereinigung von verschiedenen Bauteilen bzw. Bauteileigenschaften in einer Vorrichtung ermöglicht, wobei in dieser Vorrichtung eine Steifigkeit über eine Längsausprägung bzw. Längserstreckung der Vorrichtung in Stufen eingestellt werden kann. Dies ist vorteilhaft, um mit ein und derselben Struktur situationsgerecht eine geeignete Steifigkeit bereitstellen zu können. Beispielsweise auf ein Signal hin, welches eine Fahrsituation und/oder Aufprallsituation klassifiziert, kann eine Steifigkeit bzw. die entsprechende Kraft-Weg-Kennung der Vorrichtung gewählt bzw. eingestellt werden. Durch eine Vereinigung der Funktion mehrerer Bauteile in einer Vorrichtung kann eine Bauteillänge zudem noch gekürzt werden. Als Sekundäreffekt ist damit eine Gewichtseinsparung realisierbar.

Insbesondere können gemäß Ausführungsformen der vorliegenden Erfindung große Steifigkeitsdifferenzen mittels der Vorrichtung realisiert werden. Bedeutsam hierbei ist, dass mehrere Steifigkeitsniveaus bzw. Kraftniveaus zur Energieabsorption in einer Vorrichtung realisiert werden können, wobei die Steifigkeitsniveaus sehr weit auseinanderliegen können. Dies kann durch eine Kombination verschiedener Energieabsorptionsmechanismen mit entsprechender Mechanik erreicht werden. Solche Kraftniveauunterschiede in Fahrzeuglastpfaden treten beispielsweise in einem Längslastpfad von Vorderwagenstrukturen auf. Zum Fußgängerschutz kann ein sehr geringes Kraftniveau von wenigen Kilonewton (kN) erforderlich sein, wobei zum Insassenschutz Kraftniveaus von beispielsweise mehr als 100 kN erforderlich sein können.

Es wird vorgeschlagen, zur Energieabsorption außer einer Verjüngung gemäß Ausführungsformen der vorliegenden Erfindung ein weiteres Energieabsorptionsprinzip zu nutzen. Vorteile der Verjüngung als Energieabsorptionsprinzip bestehen insbesondere darin, dass ein Zielsteifigkeitsniveau schon zu Beginn einer translatorischen Bewegung eines Verjüngungselements, z. B. eines runden oder ovalen Rohres, schnell erreicht wird und das Steifigkeitsniveau bei der Verjüngung keinen starken Schwankungen unterliegt. Anstatt mit demselben Verjüngungselement auch eine Energieabsorption auf einem anderen Steifigkeitsniveau darzustellen, können damit einhergehende Schwankungen des Steifigkeitsniveaus, die außerhalb eines Toleranzbandes liegen, vermieden werden, indem das weitere Energieabsorptionsprinzip gemäß Ausführungsformen der vorliegenden Erfindung eingesetzt wird. Es können insbesondere auch Toleranzen umgangen werden, die aufgrund von Reibung, Materialfestigkeit, Passungen etc. auftreten sowie für Schwankungen im Lastniveau sorgen können.

Es wird also vorgeschlagen, ein weiteres Energieabsorptionsprinzip heranzuziehen und mit der Verjüngung zu kombinieren. Die Energieabsorptionseinrichtung kann ausgebildet sein, um einen schnellen Kraftanstieg auf das Zielniveau zu erreichen und das Zielniveau während der Deformation im Wesentlichen konstant zu halten bzw. ein vorgegebenes Toleranzband nicht zu verlassen. Die Zielniveaus für Deformationskraft, Deformationslänge und Absorptionsenergie der Vorrichtung können beispielsweise durch Ableitung aus Crashtestanforderungen bzw. sonstigen Vorgaben an ein gewünschtes Verhalten, um entweder ein Deformationsverhalten sicherzustellen, Grenzwerte für Verkehrsteilnehmer, beispielsweise Insassen eines eigenen Fahrzeugs oder anderer Fahrzeuge, auch Nutzfahrzeuge, Zweiräder, motorisiert oder unmotorisiert, Fußgänger etc., einzuhalten oder anderen Anforderungen zu genügen, bestimmt werden. Eine Deformationslänge der Vorrichtung soll beispielsweise ausreichend lang sein, um Anforderungen der Energieabsorption zu erfüllen, bzw. kann auch so lang sein, dass eine Verdichtung von Material nicht zu einer Erhöhung des Steifigkeitsniveaus über ein Toleranzband hinaus führt.

Die vorliegende Erfindung schafft eine Vorrichtung mit einstellbarer Steifigkeit zum Aufnehmen einer Aufprallenergie, wobei die Vorrichtung eine Matrize zum Aufnehmen und Deformieren eines Deformationselements bei einer Bewegung des Deformationselements in einer durch die Aufprallenergie bedingten Vorschubrichtung aufweist, wobei die Vorrichtung folgende Merkmale aufweist:
eine Energieabsorptionseinrichtung zum Aufnehmen einer Aufprallenergie mit einem ersten Energiebetrag, der größer als ein zweiter Energiebetrag der Aufprallenergie ist, bei dem das Deformationselement durch die Matrize deformierbar ist; und
eine Betätigungseinrichtung, die ausgebildet ist, um in Abhängigkeit von dem Energiebetrag der Aufprallenergie eine Bewegbarkeit der Energieabsorptionseinrichtung relativ zu der Matrize einzustellen, um das Deformationselement und/oder die Energieabsorptionseinrichtung zum Aufnehmen der Aufprallenergie freizugeben.

Die Vorrichtung kann in einem Fahrzeug zum Schutz der Insassen und Fußgänger vor der Aufprallenergie bei einer Kollision des Fahrzeugs mit einem stationären Objekt oder einem beweglichen Objekt, wie beispielsweise einem weiteren Fahrzeug, installiert sein. Die Vorrichtung kann in einem Vorderwagen und/oder in einem Heck des Fahrzeugs angeordnet sein. Bei der Vorrichtung kann es sich um eine sogenannte Crashstruktur bzw. Crashbox handeln. Die Vorrichtung kann das Deformationselement als einen Verjüngungsabsorber aufweisen. Der Verjüngungsabsorber basiert auf dem Prinzip einer Verformung, hier Verjüngung, des Deformationselements zum Aufnehmen und Abbauen der Aufprallenergie mit dem zweiten Energiebetrag in einem Kollisionsfall. Das Deformationselement kann als ein längliches Bauteil mit z. B. rundem oder ovalem oder (recht-) eckigen Querschnitt ausgeformt sein. Bei dem Deformationselement kann es sich um ein Rohr, eine andere Profilform oder dergleichen handeln. Das Deformationselement kann an einem der Matrize zugewandten Ende eine Verjüngung aufweisen. Ansprechend auf eine Kollision kann das Deformationselement in der Vorschubrichtung entlang seiner Längsachse durch die Matrize bewegt und dabei durch die Matrize aufgenommen und deformiert bzw. verjüngt werden, um die Aufprallenergie zu absorbieren. Die Vorschubrichtung kann einer Fahrtrichtung des Fahrzeugs entgegengerichtet sein. Die Vorschubrichtung kann im Wesentlichen einer Aufprallrichtung auf das Fahrzeug entsprechen. Die Matrize kann ausgebildet sein, um bei einem Eindringen des Deformationselements in die Matrize in die Vorschubrichtung aufgrund einer Aufprallenergie mit dem kleineren, zweiten Energiebetrag das Rohr verjüngend zu verformen bzw. deformieren, wobei mittels der Betätigungseinrichtung die Bewegbarkeit der Energieabsorptionseinrichtung relativ zu der Matrize eingeschränkt oder uneingeschränkt sein kann. Dabei kann die Matrize z. B. einen Ring bilden, dessen lichtes Maß geringer als ein maximaler Außendurchmesser des Deformationselements ist. Die Innenseite der Matrize kann beispielsweise ganz oder teilweise schräg verlaufen, sodass die Matrize eine Art Trichter bildet, der zu der Verjüngung des Deformationselements führen kann, während sich aufgrund einer Kollision das Deformationselement in der Vorschubrichtung an der Innenseite der Matrize entlang bewegt. Wenn mittels der Betätigungseinrichtung die Bewegbarkeit der Energieabsorptionseinrichtung relativ zu der Matrize uneingeschränkt ist, kann das Deformationselement durch eine Axialkraft im Wesentlichen entlang der Vorschubrichtung aufgrund einer Aufprallenergie mit dem kleineren, zweiten Energiebetrag mittels der Matrize verformt bzw. verjüngt werden und die bewegbar geschaltete Energieabsorptionseinrichtung ohne Verformung derselben verschieben. Wenn mittels der Betätigungseinrichtung die Bewegbarkeit der Energieabsorptionseinrichtung relativ zu der Matrize eingeschränkt bzw. unterbunden ist, kann das Deformationselement durch eine Axialkraft im Wesentlichen entlang der Vorschubrichtung aufgrund einer Aufprallenergie mit dem größeren, ersten Energiebetrag mittels der Matrize verformt bzw. verjüngt werden und die bewegbar geschaltete Energieabsorptionseinrichtung verformen. Die Energieabsorptionseinrichtung kann ausgebildet und angeordnet sein, um aufgrund einer Aufprallenergie mit dem größeren, ersten Energiebetrag durch das Deformationselement durch eine Axialkraft verformt zu werden. Die Betätigungseinrichtung kann ausgebildet sein, um durch das Einstellen der Bewegbarkeit der Energieabsorptionseinrichtung relativ zu der Matrize einen Abbau der Aufprallenergie durch die Energieabsorptionseinrichtung und/oder das Deformationselement zu bewirken.

Insbesondere kann die Energieabsorptionseinrichtung in der Vorschubrichtung bezüglich der Matrize nachgelagert angeordnet oder anordenbar sein. Eine solche Ausführungsform weist den Vorteil auf, dass die Aufprallenergie zunächst von dem Deformationselement durch Verjüngung desselben aufgenommen werden kann und im Falle eines Vorliegens des größeren Energiebetrags der Aufprallenergie anschließend zusätzlich von der Energieabsorptionseinrichtung durch Verformung derselben aufgenommen werden kann. Somit ist die Anordnung der Energieabsorptionseinrichtung und der Matrize relativ zueinander konstruktiv günstig, um die geeigneten Steifigkeiten der Vorrichtung auf einfache Weise bereitzustellen. Auch kann die Vorrichtung bei bezüglich der Matrize fixierter Energieabsorptionseinrichtung als Standardeinstellung ausfallsicher eine zweistufige Energieaufnahme bereitstellen.

Gemäß einer Ausführungsform, wobei das Deformationselement durch Verjüngen des Deformationselements plastisch deformierbar ist, kann die Energieabsorptionseinrichtung zumindest ein Faltelement aufweisen, das ausgebildet ist, um zum Aufnehmen der Aufprallenergie durch das Deformationselement plastisch zusammenfaltbar oder plastisch entfaltbar zu sein. Hierbei kann die Energieabsorptionseinrichtung bzw. das Faltelement eine Vorfaltung aufweisen, um definiert zusammenfaltbar oder entfaltbar zu sein. Eine solche Ausführungsform weist den Vorteil auf, dass mittels der Energieabsorptionseinrichtung in Gestalt eines Faltelements ein großer Energiebetrag sicher absorbiert werden kann.

Ferner kann die Betätigungseinrichtung ausgebildet sein, um zum Aufnehmen der Aufprallenergie durch das Deformationselement und die Energieabsorptionseinrichtung in einer ersten Betätigungsstellung die Energieabsorptionseinrichtung relativ zu der Matrize zu fixieren und zum Aufnehmen der Aufprallenergie durch das Deformationselement in einer zweiten Betätigungsstellung die Energieabsorptionseinrichtung relativ zu der Matrize freizugeben. Hierbei kann die Betätigungseinrichtung ausgebildet sein, um in der ersten Betätigungsstellung die Energieabsorptionseinrichtung relativ zu der Matrize positionsmäßig zu fixieren, wobei aufgrund einer Aufprallenergie mit dem ersten Energiebetrag das Deformationselement mittels der Matrize verformt wird und die Energieabsorptionseinrichtung durch das Deformationselement verformt wird. Auch kann die Betätigungseinrichtung ausgebildet sein, um in der zweiten Betätigungsstellung die Energieabsorptionseinrichtung relativ zu der Matrize positionsmäßig freizugeben bzw. zu lösen, wobei aufgrund einer Aufprallenergie mit dem zweiten Energiebetrag das Deformationselement mittels der Matrize verformt wird und die Energieabsorptionseinrichtung von dem Deformationselement in der Vorschubrichtung ohne Verformung verschoben wird. Mittels der Betätigungseinrichtung kann somit die Steifigkeit der Vorrichtung in Abhängigkeit von einer ermittelten Schwere eines Aufpralls bzw. einer Kollision zwischen hoch, wenn sich die Betätigungseinrichtung in der ersten Betätigungsstellung befindet, und niedrig, wenn sich die Betätigungseinrichtung in der zweiten Betätigungsstellung befindet, einstellbar sein. Entsprechend kann bei einer schweren Kollision und hoher eingestellter Steifigkeit eine Verformung des Deformationselements und der Energieabsorptionseinrichtung erfolgen, um den hohen Betrag der Aufprallenergie abzubauen. Bei einer leichten Kollision kann bei niedriger eingestellter Steifigkeit die Verformung des Deformationselements erfolgen, da ein geringer Betrag der Aufprallenergie absorbiert werden soll. Eine solche Ausführungsform weist den Vorteil auf, dass für verschiedene Aufprallszenarien eine geeignete Steifigkeit der Vorrichtung auf einfache Weise eingestellt werden kann.

Bei einer leichten Kollision kann bei niedriger eingestellter Steifigkeit die Verformung der Energieabsorptionseinrichtung erfolgen, da ein geringer Betrag der Aufprallenergie absorbiert werden soll. Somit kann die Vorrichtung auch zur Vermeidung von Fußgängerverletzungen oder Blechschäden an dem Fahrzeug selbst, beispielsweise beim Ein- oder Ausparken eines Fremdfahrzeugs, eingesetzt werden. In einem solchen Fall kann bei Erfassung eines Zusammenpralls mit einem Fußgänger eine Einstellung auf eine niedrige Steifigkeit erfolgen. Dies kann erfolgen, wenn im Kollisionsfall z. B. aufgrund von Sensordaten eine leichte Kollision festgestellt wurde. Wenn das (eigene) Fahrzeug parkt, sollte die hier vorgestellte Vorrichtung in den Zustand "steif" geschaltet sein damit das (eigene) Fahrzeug nicht durch andere, beispielsweise einparkende Fahrzeuge stark beschädigt werden kann. Ein Fußgängerschutz ist in dieser Situation nicht von besonderer Bedeutung.

Gemäß einer Ausführungsform kann die Energieabsorptionseinrichtung an der Matrize lösbar angebracht oder anbringbar sein. Dabei kann die Energieabsorptionseinrichtung insbesondere zumindest ein Faltelement aufweisen, das ausgebildet ist, um zum Aufnehmen der Aufprallenergie durch das Deformationselement plastisch entfaltbar zu sein. Insbesondere kann die Energieabsorptionseinrichtung einen Anbringungsabschnitt, an dem die Energieabsorptionseinrichtung mittels der Betätigungseinrichtung an der Matrize reversibel fixierbar ist, einen Verformungsabschnitt mit dem zumindest einen Faltelement und einen Anlageabschnitt aufweisen, gegen den das Deformationselement in Anlage bringbar ist, um die den Verformungsabschnitt aufgrund der Aufprallenergie zu verformen. Eine solche Ausführungsform weist den Vorteil einer konstruktiv einfachen Ausgestaltbarkeit auf.

Alternativ kann ein zweiteiliges Gehäuse mit einem ersten Gehäuseelement und einem zweiten Gehäuseelement vorgesehen sein, die lösbar aneinander angebracht oder anbringbar sind. Hierbei kann die Matrize ein Teil des ersten Gehäuseelements sein und kann die Energieabsorptionseinrichtung an dem zweiten Gehäuseelement angebracht oder anbringbar sein. Insbesondere kann die Energieabsorptionseinrichtung zumindest ein Faltelement aufweisen, das ausgebildet ist, um zum Aufnehmen der Aufprallenergie durch das Deformationselement plastisch zusammenfaltbar zu sein. Das erste Gehäuseelement und das zweite Gehäuseelement können mittels der Betätigungseinrichtung reversibel aneinander anbringbar sein. Wenn das erste Gehäuseelement und das zweite Gehäuseelement mittels der Betätigungseinrichtung aneinander angebracht bzw. fixiert sind, dann ist die Energieabsorptionseinrichtung bezüglich der Matrize positionsmäßig fixiert. Wenn das erste Gehäuseelement und das zweite Gehäuseelement mittels der Betätigungseinrichtung voneinander gelöst sind, dann ist die Energieabsorptionseinrichtung bezüglich der Matrize positionsmäßig freigegeben. Eine solche Ausführungsform weist den Vorteil auf, dass die Energieabsorptionseinrichtung mittels des zweiteiligen Gehäuses vor Beeinträchtigungen durch Umgebungseinflüsse geschützt werden kann.

Auch kann eine an dem Deformationselement anbringbare oder angebrachte Sicherungseinrichtung vorgesehen sein, die ausgebildet ist, um das Deformationselement gegen eine Bewegung aus der Matrize heraus entgegen der Vorschubrichtung zu sichern. Eine solche Ausführungsform weist den Vorteil auf, dass eine genaue Anordnung des Deformationselements bezüglich der Matrize verbessert und beibehalten werden kann. Somit kann ein Abbau der Aufprallenergie genau definiert und rasch erfolgen, da eine Beeinträchtigung durch ein Verrutschen des Deformationselements vermieden werden kann.

Die vorliegende Erfindung schafft ferner ein Verfahren zum Einstellen einer Steifigkeit einer vorstehend genannten Vorrichtung mit einstellbarer Steifigkeit zum Aufnehmen einer Aufprallenergie, wobei das Verfahren den folgenden Schritt aufweist:
Ansteuern der Betätigungseinrichtung in Abhängigkeit von dem Energiebetrag der Aufprallenergie, um die Steifigkeit der Vorrichtung einzustellen.

Das Verfahren kann in Verbindung mit einer oben genannten Vorrichtung vorteilhaft ausgeführt werden. Insbesondere kann im Schritt des Ansteuerns bewirkt werden, dass die Bewegbarkeit des Deformationselements bezüglich der Matrize mittels der Betätigungseinrichtung eingestellt wird, um in Abhängigkeit von dem Energiebetrag der Aufprallenergie das Deformationselement und/oder die Energieabsorptionseinrichtung zum Aufnehmen der Aufprallenergie freizugeben. Hierbei kann im Schritt des Ansteuerns bewirkt werden, dass die Betätigungseinrichtung in einer ersten Betätigungsstellung zum Aufnehmen der Aufprallenergie durch die Energieabsorptionseinrichtung und das Deformationselement die Energieabsorptionseinrichtung bezüglich der Matrize positionsmäßig fixiert und in einer zweiten Betätigungsstellung zum Aufnehmen der Aufprallenergie durch das Deformationselement die Energieabsorptionseinrichtung bezüglich der Matrize positionsmäßig freigibt. Somit kann im Schritt des Ansteuerns bewirkt werden, dass die Betätigungseinrichtung zwischen der ersten Betätigungsstellung und der zweiten Betätigungsstellung bewegt wird bzw. zwischen einem ersten Betätigungszustand und einem zweiten Betätigungszustand verändert wird.

Das Verfahren kann beispielsweise in einem Steuergerät durchführt werden, das mit der im Vorhergehenden erläuterten Vorrichtung verbunden oder in diese integriert sein kann. Das Steuergerät kann ausgebildet sein, um die Schritte des erfindungsgemäßen Verfahrens in entsprechenden Einrichtungen der im Vorhergehenden erläuterten erfindungsgemäßen Vorrichtung durchzuführen bzw. umzusetzen. Auch durch diese Ausführungsvariante der Erfindung in Form eines Steuergeräts kann die der Erfindung zugrunde liegende Aufgabe vorteilhaft gelöst werden.

Unter einem Steuergerät kann vorliegend ein elektrisches Gerät verstanden werden, das Sensorsignale hinsichtlich eines zu erwartenden Energiebetrags der Aufprallenergie verarbeitet und in Abhängigkeit davon Ansteuersignale für die Betätigungseinrichtung ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplat-tenspeicher oder einem optischen Speicher gespeichert sein kann und zur Durchführung des im Vorhergehenden erläuterten Verfahrens verwendet wird, wenn das Programm auf einem Computer oder einer Vorrichtung bzw. einem im Vorhergehenden erläuterten Steuergerät ausgeführt wird.

Die Erfindung wird nachstehend anhand der beigefügten Zeichnungen beispielhaft näher erläutert. Es zeigen:
- Figuren 1A bis 1C: Prinzipdarstellungen zur Funktionsweise einer Vorrichtung zum Aufnehmen von Aufprallenergie mit einstellbarer Steifigkeit;
- Figuren 2A bis 2C: Prinzipdarstellungen zur Funktionsweise einer weiteren Vorrichtung zum Aufnehmen von Aufprallenergie mit einstellbarer Steifigkeit;
- Fig. 3A: eine Prinzipdarstellung eines Verjüngungsabsorbers;
- Fig. 3B: ein Kraft-Weg-Diagramm einer Verjüngung mittels des Verjüngungsabsorbers aus Fig. 3A;
- Fig. 4: ein Spannungs-Dehnungs-Diagramm für eine Verformung einer Energieabsorptionseinrichtung;
- Fig. 5: eine schematische Darstellung eines Fahrzeugs mit einer Vorrichtung mit einstellbarer Steifigkeit zum Aufnehmen einer Aufprallenergie gemäß einem Ausführungsbeispiel der vorliegenden Erfindung;
- Figuren 6A und 6B: schematische Schnittdarstellungen von Vorrichtungen mit einstellbarer Steifigkeit zum Aufnehmen einer Aufprallenergie gemäß Ausführungsbeispielen der vorliegenden Erfindung;
- Figuren 7A bis 7C: eine Sicherungseinrichtung gemäß einem Ausführungsbeispiel der vorliegenden Erfindung; und
- Fig. 8: ein Ablaufdiagramm eines Verfahrens zum Einstellen einer Steifigkeit einer Vorrichtung mit einstellbarer Steifigkeit zum Aufnehmen einer Aufprallenergie, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Die im Nachfolgenden erläuterten adaptiven Crashstrukturen ersetzen Teile bestehender Vorderwagenstrukturen in Kraftfahrzeugen. Beispielsweise können die hierin vorgeschlagenen Strukturen die Crashbox und den vorderen Teil der Längsträger sowie auch beispielsweise Komponenten eines Fußgängerschutzsystems ersetzen, die hier vorgeschlagenen Strukturen können aber auch an anderer Stelle im Lastpfad eingesetzt werden.

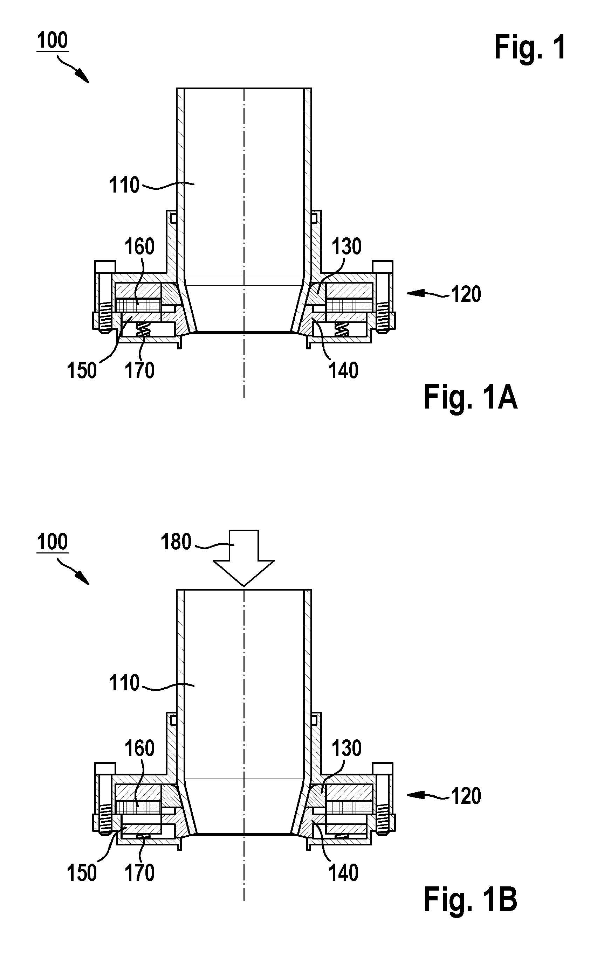

Figuren 1A bis 1C zeigen Prinzipdarstellungen zur Funktionsweise einer Vorrichtung 100 zum Aufnehmen von Aufprallenergie mit einstellbarer Steifigkeit. Die Darstellungen der Figuren 1A bis 1C zeigen jeweils einen Längsschnitt durch die Vorrichtung bzw. einen Abschnitt der Vorrichtung mit einstellbarer Steifigkeit bzw. adaptive Crashstruktur 100, wie sie beispielsweise in einen Vorderwagen eines Fahrzeugs installiert sein kann. Die adaptive Crashstruktur 100 umfasst ein Deformationselement 110, das hier als ein Rohr ausgebildet ist, sowie ein Gehäuse 120, in dem eine feste bzw. nicht-ausrückbare Matrize 130 und eine brechbare bzw. ausrückbare Matrize 140 angeordnet sind. Ferner umfasst die Vorrichtung 100 einen innerhalb des Gehäuses 120 verschiebbaren Ring 150 zur Abstützung bzw. Freigabe der ausrückbaren Matrize 140, eine angrenzend an den Ring 150 angeordnete stromführende Spule 160 und ein zwischen dem Ring 150 und einer weiteren Wand des Gehäuses 120 angeordnetes Federelement 170. Eine Aufprallrichtung bzw. Vorschubrichtung 180 des Deformationselements 110 entlang seiner mittels einer Punkt-Strich-Linie gekennzeichneten Längserstreckung ist durch einen Pfeil in der Darstellung gekennzeichnet. Die Punkt-Strich-Linie markiert auch eine Mittelachse der Crashstruktur 100.

Die adaptive Crashstruktur 100 weist in erster Hinsicht zwei Steifigkeiten auf. Die Grundeinstellung der Struktur 100 ist die höhere Steifigkeit, die der eines vorderen Längsträgers des Fahrzeugs entspricht. Die zweite Einstellung, auf die umgeschaltet wird, weist eine geringere Steifigkeit auf. Ebenfalls möglich ist es, die adaptive Crashstruktur 100 weiter hinten in der Frontstruktur einzubauen, d.h. als Ersatz eines hinteren Längsträgers. Die Struktur 100 kann ebenso für das Fahrzeugheck verwendet werden, auch wenn hierin lediglich der Vorderwagen betrachtet wird.

Im Falle hoher Aufprallgeschwindigkeiten und somit hoher Kollisionsenergien ist es vorteilhaft, frühzeitig ein hohes Energieabsorptionsniveau zu erreichen, weshalb die höhere Steifigkeit als Grundeinstellung sinnvoll ist. Im Falle geringer Kollisionsenergien ist eine niedrigere Steifigkeit erforderlich, damit die Struktur 100 durch die geringere eingeleitete Kraft verformt werden kann. Dadurch ergeben sich Vorteile bei der Insassenbelastung in Form einer in der Intensität geringeren, dafür aber längeren Belastung. Die beiden Niveaus werden mithilfe eines Aktuators eingestellt.

Fig. 1A zeigt ein Schnittbild der adaptiven Crashstruktur 100 in Ruhestellung. Hier ist der innerhalb des Gehäuses verschiebbare Ring 150 zwischen der ausrückbaren Matrize 140 und einer Wand des Gehäuses 120 angeordnet, sodass die ausrückbare Matrize 140 abgestützt ist. Entsprechend ist die Steifigkeit der Crashstruktur 100 hoch. Bei einer Kollision wird das Rohr bzw. Deformationselement 110 in die feste Matrize 130 und in die brechbare Matrize 140 geschoben und dabei stark verjüngt.

Fig. 1B zeigt ein Schnittbild der adaptiven Crashstruktur 100 in aktuierter Stellung. Hier ist der Ring 150 ansprechend auf einen Stromfluss in der Spule 160 nach unten verschoben. Kommt es nun zu einer Kollision, dringt das Rohr 110 ebenfalls in die feste Matrize 130 und in die brechbare Matrize 140 ein. Da der Ring 150 die brechbare Matrize 140 nicht abstützt, kann diese infolge der Aufprägung der Radialkraft durch das Rohr 110 brechen, z. B. an Sollbruchstellen, und ausrücken. Ein Verjüngungsgrad des Rohrs 110 ist somit verglichen mit der in Fig. 1A gezeigten Grundeinstellung geringer.

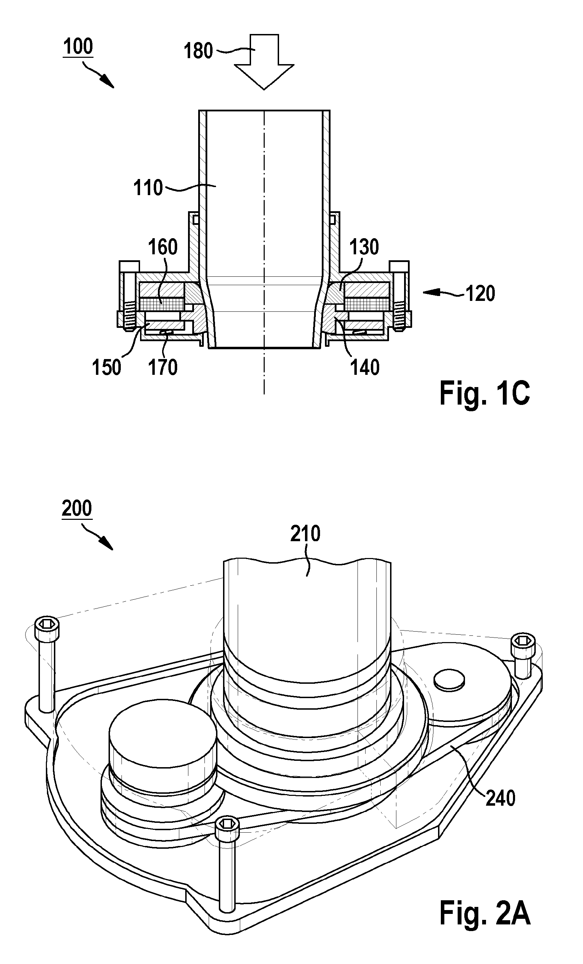

Fig. 1C zeigt ein Schnittbild der adaptiven Crashstruktur 100 im Kollisionsfall, und zwar bei weicher Einstellung, also niedriger Steifigkeit, wie sie anhand der Darstellung in Fig. 1B erläutert ist.

Unter Bezugnahme auf die Figuren 1A bis 1C stellt anders ausgedrückt zur Anpassung der Steifigkeit auf hohen Niveaus, z. B. Kräfte größer als 100 kN, die Verjüngung ein geeignetes Konzept dar. Den Figuren 1A bis 1C kann die Funktionsweise einer geeigneten Crashstruktur 100 entnommen werden. Hierbei zeigt Fig. 1A die Ruhestellung der Crashstruktur 100. Bei einer Kollision wird das Rohr 110 in die feste Matrize 130 und in die brechbare Matrize 140 geschoben und dabei stark verjüngt. Fig. 1A zeigt hierbei ein Schnittbild der adaptiven Crashstruktur 100 in Ruhestellung mit hoher Steifigkeit. Bei einer Betätigung bzw. Aktuierung mittels der Spule 160 und ggf. des Federelements 170 wird der Ring 150 verschoben, wie es in Fig. 1B gezeigt ist. Fig. 1B zeigt ein Schnittbild der adaptiven Crashstruktur 100 in betätigter bzw. aktuierter Stellung. Kommt es nun zu einer Kollision, dringt das Rohr 110 in die feste Matrize 130 und in die brechbare Matrize 140 ein. Da der Ring 150 die brechbare Matrize 140 nicht abstützt, kann dieselbe infolge der Aufprägung der Radialkraft durch das Rohr 110 brechen und ausrücken. Der Verjüngungsgrad des Rohrs 110 ist somit verglichen mit der Grundeinstellung geringer, wie es in Fig. 1C gezeigt ist. Fig. 1C zeigt ein Schnittbild der adaptiven Crashstruktur 100 im Kollisionsfall in aktuiertem Zustand mit geringer bzw. weicher Steifigkeit.

Anstelle des Rings 150 können auch Bolzen verwendet werden, welche in einer ersten Position die ausrückbare Matrize 140 freigeben und nach einer Lageänderung der Bolzen in eine zweite Position die ausrückbare Matrize 140 freigeben, sodass dieselbe in Folge einer Aufprägung einer Radialkraft ausrücken kann.

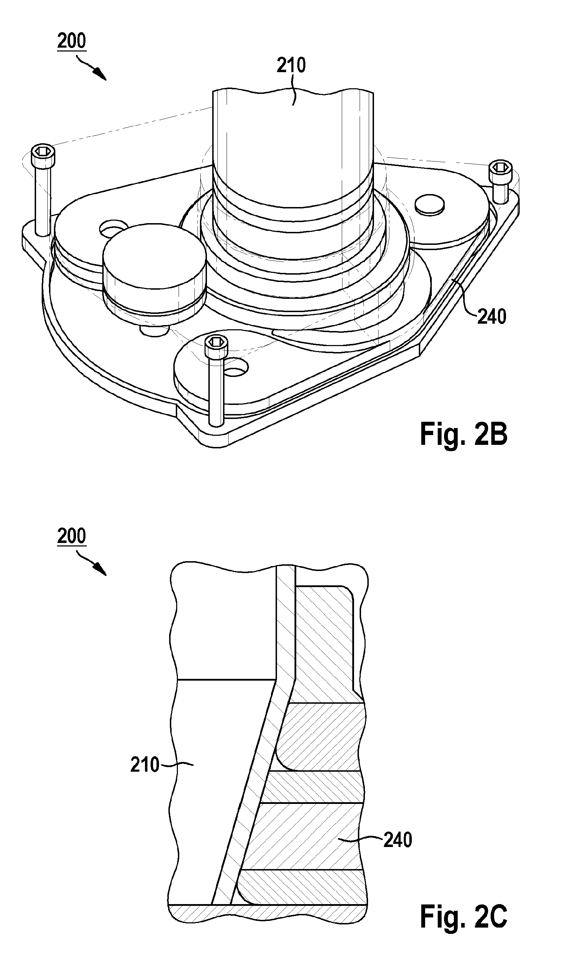

Figuren 2A bis 2C zeigen Prinzipdarstellungen zur Funktionsweise einer weiteren Vorrichtung 200 zum Aufnehmen von Aufprallenergie mit einstellbarer Steifigkeit. Vom Prinzip der Aufnahme der Aufprallenergie her entspricht die Vorrichtung 200 beispielsweise der Vorrichtung aus den Figuren 1A bis 1C. Gezeigt sind jeweils ein Rohr 210, das beispielsweise dem Rohr aus den Figuren 1A bis 1C entspricht, und eine Matrize 240, die beispielhaft ähnlich oder gleich zumindest einer Rohrschelle ausgebildet ist. Wenn die Matrize 240 bzw. Rohrschelle geschlossen ist, ist die Steifigkeit der Vorrichtung 200 auf hart eingestellt, wie es in Fig. 2A gezeigt ist. Wenn die Matrize 240 bzw. Rohrschelle geöffnet ist, ist die Steifigkeit der Vorrichtung 200 auf weich eingestellt, wie es in Fig. 2B gezeigt ist. Die Matrize 240 bzw. Rohrschelle kann somit bei der in den Figuren 2A bis 2C gezeigten Vorrichtung 200 beispielsweise die Funktion der brechbaren Matrize aus den Figuren 1A bis 1C übernehmen. Fig. 2C zeigt einen Ausschnitt der Vorrichtung 200.

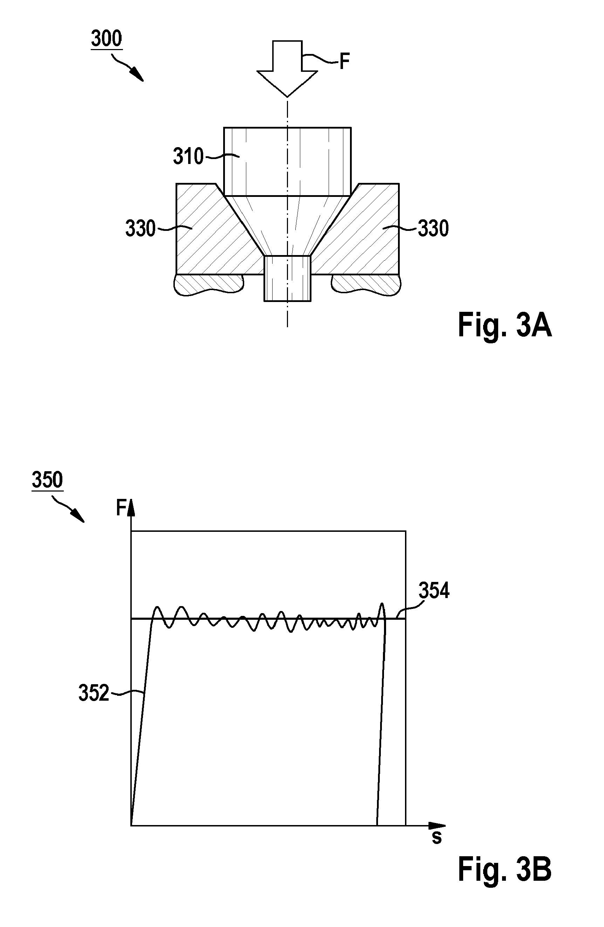

Fig. 3A zeigt eine Prinzipdarstellung eines Verjüngungsabsorbers 300, bei dem ein Rohr 310 bzw. Deformationselement aufgrund einer Kraft F, die symbolisch mittels eines Pfeils dargestellt ist, in eine Matrize 330 schiebbar und dabei durch Verjüngung desselben verformbar ist. Hierbei ist ein Öffnungsdurchmesser einer Verjüngungsöffnung der Matrize 330 geringer als ein Außendurchmesser des Rohres 310 im unverformten bzw. unverjüngten Zustand.

Fig. 3B zeigt ein Kraft-Weg-Diagramm 350 der Verjüngung mittels des Verjüngungsabsorbers aus Fig. 3A. An der Abszissenachse ist ein Weg s aufgetragen, der einer Strecke entspricht, die bei dem Verjüngungsabsorber aus Fig. 3A das Rohr in die Matrize geschoben wird. An der Ordinatenachse ist eine Kraft F aufgetragen, die zur translatorischen Bewegung des Rohres aus Fig. 3A zur Verjüngung desselben benötigt wird. In dem Kraft-Weg-Diagramm 350 sind ein Kraft-Weg-Verlauf 352 und eine Zielkraftlinie 354 bzw. ein Zielkraftniveau dargestellt. Der Kraft-Weg-Verlauf 352 weist in einem kurzen Abschnitt des Weges s einen steilen Anstieg auf der Kraft F von null bis zu einem Toleranzbereich um die Zielkraftlinie 354 herum auf. Über einen weiteren, langen Abschnitt des Weges s hinweg bleibt der Kraft-Weg-Verlauf 352 in dem Toleranzbereich um die Zielkraftlinie 354 herum, bevor der Kraft-Weg-Verlauf 352 in einem weiteren, kurzen Abschnitt des Weges s steil auf null abfällt. Vorteile des Energieabsorptionsprinzips der Verjüngung sind, dass das durch die Zielkraftlinie 354 veranschaulichte Zielkraftniveau nahe am Beginn der translatorischen Bewegung des Rohres bzw. Verjüngungselements entlang dem Weg s schnell erreicht wird, und dass im Weiteren das Kraftniveau bei der Verjüngung lediglich geringen Schwankungen um die Zielkraftlinie 354 unterliegt.

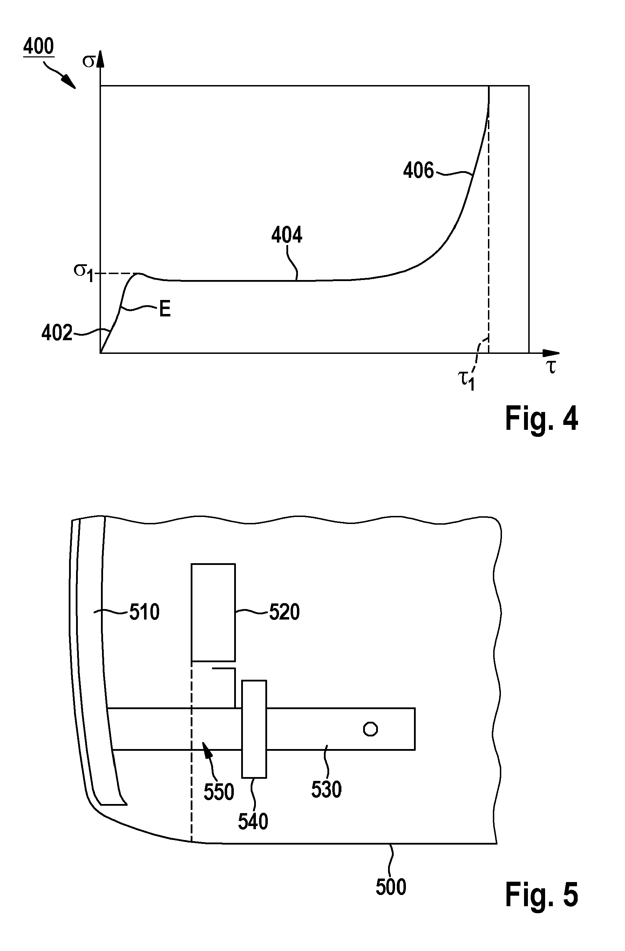

Fig. 4 zeigt ein Spannungs-Dehnungs-Diagramm 400 für eine Verformung einer Energieabsorptionseinrichtung für Vorrichtungen gemäß Ausführungsbeispielen der vorliegenden Erfindung. An der Abszissenachse ist eine Dehnung τ bei der Verformung der Energieabsorptionseinrichtung aufgetragen, an der Ordinatenachse ist eine Spannung σ bei der Verformung der Energieabsorptionseinrichtung aufgetragen. Somit zeigt Fig. 4 ein Deformationsverhalten der Energieabsorptionseinrichtung. Ein in dem Spannungs-Dehnungs-Diagramm 400 eingezeichneter Spannungs-Dehnungs-Verlauf weist einen linear elastischen Abschnitt 402, einen Plateauabschnitt 404 und einen Verdichtungsabschnitt 406 auf. Der Spannungs-Dehnungs-Verlauf weist in dem linear elastischen Abschnitt 402 einen linearen Anstieg von null bis zu einer Schwellenspannung σ₁ auf. Der Anstieg des Spannungs-Dehnungs-Verlaufs in dem linear elastischen Abschnitt 402 entspricht dem Elastizitätsmodul E der Energieabsorptionseinrichtung. Der Spannungs-Dehnungs-Verlauf weist zwischen dem linear elastischen Abschnitt 402 und dem Verdichtungsabschnitt 406 den Plateauabschnitt 404 auf, in dem der Spannungs-Dehnungs-Verlauf bei Spannungen, die innerhalb eines Toleranzbereichs um die Schwellenspannung σ₁ liegen, im Wesentlichen parallel zur Abszissenachse verläuft. Von einem Ende des Plateauabschnitts 404 steigt der Spannungs-Dehnungs-Verlauf in dem Verdichtungsabschnitt 406 bis zu einer Schwellendehnung τ₁ auf Spannungswerte größer der Schwellenspannung σ₁ an. Vorteilhaft bei einer Energieabsorptionseinrichtung mit dem in Fig. 4 gezeigten Deformationsverhalten ist, dass ein schneller Kraftanstieg auf ein in Fig. 4 durch den Plateauabschnitt 404 veranschaulichtes Zielniveau erreicht wird und dass das Zielniveau während der Deformation über eine weite Strecke möglichst konstant bleibt bzw. ein vorgegebenes Toleranzband nicht verlässt.

Nachfolgend werden verschiedene Ausführungsbeispiele der vorliegenden Erfindung beschrieben, bei denen Prinzipien einer Kombination zweier Energieabsorptionsverfahren Anwendung finden. Es wird vorgeschlagen, außer einer Verjüngung ein weiteres Energieabsorptionsverfahren einzusetzen, welches einen Bereich von geringen Kräften bzw. geringer Aufprallenergie abdeckt. Ebenso wird auf eine Integrierbarkeit in ein Fahrzeug eingegangen.

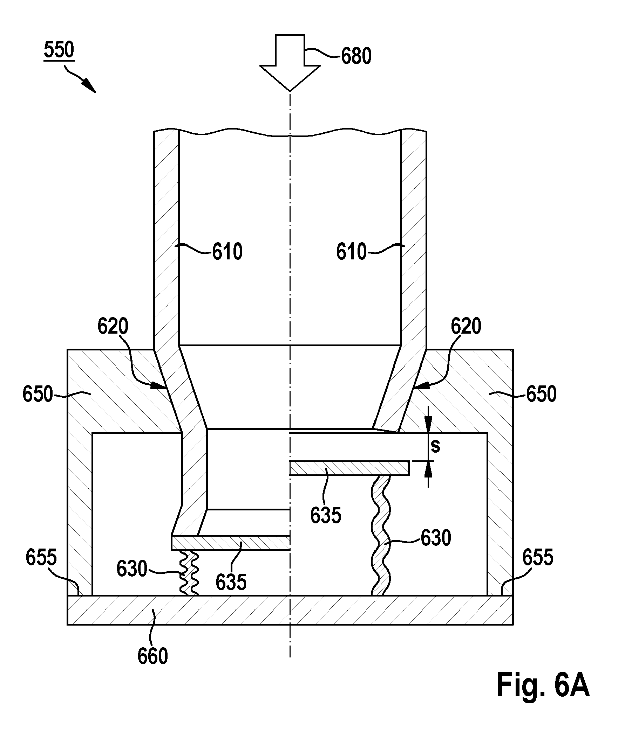

Fig. 5 zeigt eine schematische Darstellung eines Fahrzeugs mit einer Vorrichtung mit einstellbarer Steifigkeit zum Aufnehmen einer Aufprallenergie gemäß einem Ausführungsbeispiel der vorliegenden Erfindung. Das Fahrzeug 500 weist einen Querträger 510 bzw. eine Vorderwagenstruktur, z. B. mit einer Stoßstange, einen Kühler 520, einen Längsträger 530, eine Prallplatte 540 und die Vorrichtung 550 mit einstellbarer Steifigkeit zum Aufnehmen einer Aufprallenergie auf. Bei der Vorrichtung 550 handelt es sich um eine sogenannte adaptive Crashstruktur. Der Längsträger 530 erstreckt sich entlang einer Längserstreckungsachse des Fahrzeugs 500. Der Kühler 520 erstreckt sich quer zu der Längserstreckungsachse des Fahrzeugs 500. Die Prallplatte 540 ist an dem Längsträger 530 angebracht. Die Vorrichtung 550 bzw. adaptive Crashstruktur ist zwischen dem Querträger 510 und der Prallplatte 540 an dem Längsträger 530 angeordnet. Beispielhaft ist die Vorrichtung 550 im Bereich des Kühlers 520 an dem Längsträger 530 angeordnet. Auf die Vorrichtung 550 bzw. adaptive Crashstruktur wird in den Figuren 6A bis 6B detaillierter eingegangen.

Fig. 6A zeigt eine schematische Schnittdarstellung einer Vorrichtung 550 mit einstellbarer Steifigkeit zum Aufnehmen einer Aufprallenergie gemäß einem Ausführungsbeispiel der vorliegenden Erfindung. Bei der Vorrichtung 550 handelt es sich beispielsweise um eine sogenannte adaptive Crashstruktur. Bei der Vorrichtung 550 handelt es sich beispielsweise um die Vorrichtung aus Fig. 5, wobei die Vorrichtung 550 in dem Fahrzeug aus Fig. 5 angeordnet sein oder werden kann. Die Vorrichtung 550 weist ein Verjüngungsrohr 610 bzw. Deformationselement, eine Verjüngungsmatrize 620 bzw. Matrize, eine Energieabsorptionseinrichtung 630 bzw. ein Faltelement, eine Druckplatte 635, ein erstes Gehäuseteil 650, Trennstellen 655 und ein zweites Gehäuseteil 660 auf. Ferner ist in Fig. 6A eine Vorschubrichtung 680 bzw. Belastungsrichtung dargestellt, entlang der bei einem Aufprall des Fahrzeugs das Verjüngungsrohr 610 durch die Verjüngungsmatrize 620 hindurchgeschoben wird. Die Vorschubrichtung 680 erstreckt sich entlang einer mittels einer Punkt-Strich-Linie gekennzeichneten Längserstreckungsachse des Verjüngungsrohres 610 und ist in der Darstellung in Fig. 6A durch einen Pfeil bezeichnet. Die Punkt-Strich-Linie repräsentiert auch eine Mittelachse der Vorrichtung 550. Zudem ist in Fig. 6A ein Weg bzw. eine Strecke s dargestellt, die zwischen der Verjüngungsmatrize 620 und der Druckplatte 635 vorgesehen ist.

In der Vorrichtung 550 ist eine Kombination zweier Energieabsorptionsverfahren realisiert, jenes der Verjüngung mit jenem eines Faltelements. In Fig. 6A sind zwei Energieaufnahmeszenarien in Verbindung mit der Vorrichtung 550 dargestellt. In Fig. 6A ist rechts der Mittelachse eine Ausgangskonfiguration bzw. ein Ausgangszustand der Vorrichtung 550 bei einer geringen Aufprallenergie bzw. geringen Kräften und ist links der Mittelachse eine geschaltete Konfiguration bzw. ein geschalteter Zustand der Vorrichtung 550 bei einer großen Aufprallenergie bzw. großen Kräften abgebildet.

Das Verjüngungsrohr 610 ist aufgrund einer Aufprallenergie entlang der Vorschubrichtung 680 durch die Verjüngungsmatrize 620 hindurchschiebbar. Das Verjüngungsrohr 610 ist in Anlage gegen die Verjüngungsmatrize 620 angeordnet. Die Verjüngungsmatrize 620 ist als ein Teilabschnitt des ersten Gehäuseteils 650 ausgeformt. Die Verjüngungsmatrize 620 ist ausgebildet, um das Verjüngungsrohr 610 bei einer Bewegung desselben entlang der Vorschubrichtung 680 durch die Verjüngungsmatrize 620 hindurch zu verjüngen.

Das erste Gehäuseteil 650 ist bezüglich des zweiten Gehäuseteils 660 in der Vorschubrichtung 680 vorgelagert. Das erste Gehäuseteil 650 und das zweite Gehäuseteil 660 sind lose miteinander an den Trennstellen 655 verbunden. Das erste Gehäuseteil 650 und das zweite Gehäuseteil 660 sind mittels einer Betätigungseinrichtung bzw. eines Aktuators an den Trennstellen 655 voneinander lösbar bzw. trennbar oder fest miteinander verbindbar. Das erste Gehäuseteil 650 und das zweite Gehäuseteil 660 umschließen einen Hohlraum.

Die Energieabsorptionseinrichtung 630 und die Druckplatte 635 sind in dem Hohlraum des ersten Gehäuseteils 650 und des zweiten Gehäuseteils 660 angeordnet. Die Energieabsorptionseinrichtung 630 ist an dem zweiten Gehäuseteil 660 befestigt. Die Druckplatte 635 ist an einem dem Verjüngungsrohr 610 zugewandten Ende der Energieabsorptionseinrichtung 630 angebracht. Die Energieabsorptionseinrichtung 630 ist durch eine Bewegung des Verjüngungsrohres 610 entlang der Vorschubrichtung 680 verformbar. Hierbei ist die Energieabsorptionseinrichtung 630 zusammenfaltbar. Eine Kraftübertragung in die Energieabsorptionseinrichtung 630 von dem Verjüngungsrohr 610 aus erfolgt über die Druckplatte 635, welche durch das Verjüngungsrohr 610 bei der Bewegung des Verjüngungsrohres 610 verschoben wird. Somit ist die Energieabsorptionseinrichtung 630 zum Energieabbau durch Deformation bei großen Kräften bzw. großer Aufprallenergie ausgebildet.

Bei einer geringen Eingangskraft bzw. Aufprallenergie wird durch die Betätigungseinrichtung das zweite Gehäuseteil 660 zur Bewegung entlang der Vorschubrichtung 680 freigegeben. Das Verjüngungsrohr 610 wird mittels der Verjüngungsmatrize 620 verjüngt und verschiebt die Energieabsorptionseinrichtung 630 und das zweite Gehäuseteil 660 entlang der Vorschubrichtung 680. Bei einer großen Eingangskraft bzw. Aufprallenergie wird durch die Betätigungseinrichtung das zweite Gehäuseteil 660 mit dem ersten Gehäuseteil 650 fest verbunden. Das Verjüngungsrohr 610 wird mittels der Verjüngungsmatrize 620 verjüngt, trifft unmittelbar, wenn die Strecke s null beträgt, oder nach einem Weg s ungleich null auf die Druckplatte 635 und bewegt dieselbe in der Vorschubrichtung, wobei die Energieabsorptionseinrichtung 630 zusammengefaltet wird. So wirkt die Energieabsorptionseinrichtung 630 parallel zur Verjüngungsmatrize 620, um die große Aufprallenergie abzubauen bzw. aufzunehmen.

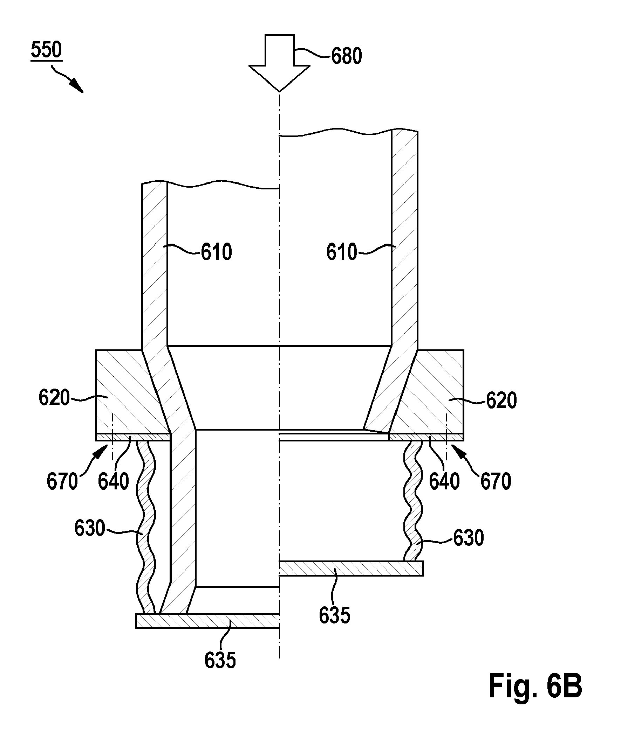

Fig. 6B zeigt eine schematische Schnittdarstellung einer Vorrichtung 550 mit einstellbarer Steifigkeit zum Aufnehmen einer Aufprallenergie gemäß einem Ausführungsbeispiel der vorliegenden Erfindung. Die Darstellung, die Vorrichtung 550 und deren Funktionsweise in Fig. 6B entsprechen der Darstellung, der Vorrichtung und deren Funktionsweise aus Fig. 6A mit der Ausnahme, dass in Fig. 6B die Energieabsorptionseinrichtung 630 entfaltbar ausgeführt ist, anstatt des zweiteiligen Gehäuses die Verjüngungsmatrize 620 als eigenständiges Bauteil vorgesehen ist, und die Energieabsorptionseinrichtung 630 an der Verjüngungsmatrize 620 mittels einer Betätigungseinrichtung 640 lösbar und fixierbar über einen Befestigungsabschnitt 670 der Energieabsorptionseinrichtung 630 angebracht ist. Ferner entfällt die Strecke s in Fig. 6B.

In der Vorrichtung 550 ist ebenfalls eine Kombination zweier Energieabsorptionsverfahren realisiert, jenes der Verjüngung mit jenem eines Faltelements. Die Verjüngungsmatrize 620 und die Energieabsorptionseinrichtung 630 sind lose miteinander verbunden und sind mittels der Betätigungseinrichtung 640 an einer Trennstelle voneinander trennbar oder fest miteinander verbindbar. Die Energieabsorptionseinrichtung 630 ist ausgebildet, um bei größeren Kräften bzw. großer Aufprallenergie zum Energieabbau deformiert bzw. entfaltet zu werden. Bei einer geringen Eingangskraft bzw. Aufprallenergie wird durch die Betätigungseinrichtung 640 der Befestigungsabschnitt 670 und somit die Energieabsorptionseinrichtung 630 zur Bewegung entlang der Vorschubrichtung 680 relativ zu der Verjüngungsmatrize 620 freigegeben. Das Verjüngungsrohr 610 wird mittels der Verjüngungsmatrize 620 verjüngt und schiebt die Druckplatte 635 sowie die Energieabsorptionseinrichtung 630 entlang der Vorschubrichtung 680 weg. Bei einer großen Eingangskraft bzw. Aufprallenergie wird durch die Betätigungseinrichtung 640 der Befestigungsabschnitt 670 und somit die Energieabsorptionseinrichtung 630 fest mit der Verjüngungsmatrize 620 verbunden. Das Verjüngungsrohr 610 wird mittels der Verjüngungsmatrize 620 verjüngt, trifft auf die Druckplatte 635 und entfaltet die Energieabsorptionseinrichtung 630. So wirkt die Energieabsorptionseinrichtung 630 parallel, nach einer zurückgelegten Differenzstrecke, zur Verjüngungsmatrize 620, um die große Aufprallenergie abzubauen. Alternativ kann das Verjüngungsrohr 610 unmittelbar auf die Energieabsorptionseinrichtung 630 treffen, sodass die Verjüngungsmatrize 620 und die Energieabsorptionseinrichtung 630 ohne die Differenzstrecke parallel wirken.

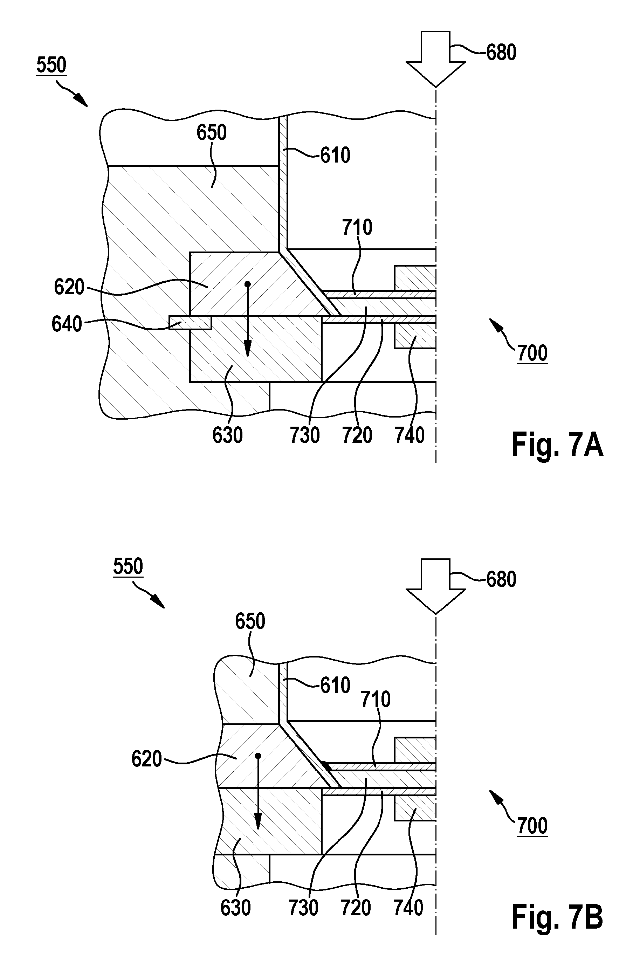

Figuren 7A bis 7C zeigen eine Sicherungseinrichtung 700 gemäß einem Ausführungsbeispiel der vorliegenden Erfindung zur Sicherung des Verjüngungsrohres einer der Vorrichtungen 550 aus einer der Figuren 5 bis 6B gegen ein Herausfallen aus der Verjüngungsmatrize.

Fig. 7A zeigt eine Vorrichtung 550 mit einstellbarer Steifigkeit zum Aufnehmen einer Aufprallenergie mit einer Sicherungseinrichtung gemäß einem Ausführungsbeispiel der vorliegenden Erfindung. Die Vorrichtung 550 ähnelt einer der Vorrichtungen aus den Figuren 5 bis 6B. In Fig. 7A ist eine Vorrichtung 550 mit einem Verjüngungsrohr 610, einer Verjüngungsmatrize 620, einer Energieabsorptionseinrichtung 630, einer Betätigungseinrichtung 640 und einem Vorrichtungsgehäuse 650 gezeigt. Auch ist eine Vorschubrichtung 680 eingezeichnet, entlang der das Verjüngungsrohr 610 aufgrund einer Aufprallenergie bewegbar ist. Die Verjüngungsmatrize 620 ist je nach Betätigungsstellung der Betätigungseinrichtung 640 entlang der Vorschubrichtung 680 längs ausrückbar bzw. einrückbar. Auch ist durch das Rohr hindurch entlang der Vorschubrichtung 680 eine Werkzeugeinführung zur Montage der Sicherungseinrichtung möglich. Die Sicherungseinrichtung 700 weist eine Platte 710 bzw. Scheibe, eine Konterplatte 720, ein Zwischenelement 730 und ein Befestigungselement 740 auf.

Fig. 7B zeigt eine Detailansicht der Sicherungseinrichtung aus Fig. 7A. In einem vorverjüngten, in der Vorschubrichtung 680 vorgelagerten Ende des Verjüngungsrohres 610 ist die Platte 710 angebracht, z. B. angeschweißt. Die Konterplatte 720 ist mittels des Befestigungselements, z. B. einer Schraube oder dergleichen, mit der Platte 710 verschraubt. Die Konterplatte 720 weist einen größeren Umfang als ein Umfang des Verjüngungsrohres 610 an dem vorverjüngten Ende desselben auf. Die Konterplatte 720 ist von außen an dem vorverjüngten Ende des Verjüngungsrohres 610 angebracht. Dabei ist die Konterplatte 720 an einer durch die Verjüngungsmatrize gebildeten Stufe gegen eine Bewegung entgegen der Vorschubrichtung 680 abgestützt. Zwischen der Platte 710 und der Konterplatte 720 ist beispielsweise ein Elastomer oder ein Klebstoff als das Zwischenelement 730 angeordnet bzw. eingebracht. Das Zwischenelement 730 ist ausgebildet, um eine Verspannung der Platte 710 und der Konterplatte 720 zu verbessern.

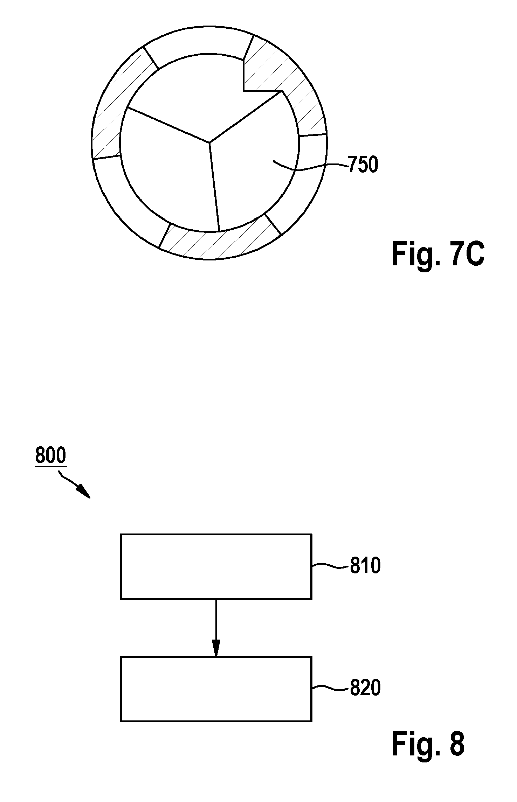

Fig. 7C zeigt die Platte oder die Konterplatte aus Fig. 7A bzw. Fig. 7B in einer Ausführung in einzelnen Segmenten 750 bzw. Ringsegmenten. In Fig. 7C sind beispielhaft drei Segmente 750 dargestellt. Hierbei sind die Segmente 750 so miteinander verbunden, dass trotz der Verspannung bzw. Pressung ein Wandern bzw. Verrutschen der Segmente 750 verhindert ist. Eine Verbindung der Segmente 750 untereinander ist beispielsweise ausgebildet, um bei einsetzender Verjüngung des Verjüngungsrohres zu versagen.

Fig. 8 zeigt ein Ablaufdiagramm eines Ausführungsbeispiels eines Verfahrens 800 zum Einstellen einer Steifigkeit einer Vorrichtung mit einstellbarer Steifigkeit zum Aufnehmen einer Aufprallenergie für ein Fahrzeug. Das Verfahren 800 kann in Verbindung mit einer Vorrichtung gemäß den Figuren 5 bis 6B vorteilhaft ausgeführt werden. Das Verfahren 800 wird insbesondere in Zusammenhang mit einem Steuergerät des Fahrzeugs, das mit der Vorrichtung elektrisch verbunden ist, im Falle einer Kollision oder eines Abstellens des Fahrzeugs durchgeführt. Das Verfahren 800 weist einen Schritt des Einlesens 810 eines Aufprallenergiesignals auf, das einen Energiebetrag einer Aufprallenergie bei einem Aufprall des Fahrzeugs angibt. Auch weist das Verfahren 800 einen Schritt des Ansteuerns 820 der Betätigungseinrichtung der Vorrichtung in Abhängigkeit von dem Energiebetrag der Aufprallenergie auf, um die Steifigkeit der Vorrichtung einzustellen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Vorrichtung (550) mit einstellbarer Steifigkeit zum Aufnehmen einer Aufprallenergie, wobei die Vorrichtung (550) eine Matrize (620) zum Aufnehmen und Deformieren eines Deformationselements (610) bei einer Bewegung des Deformationselements (610) in einer durch die Aufprallenergie bedingten Vorschubrichtung (680) aufweist, wobei die Vorrichtung (550) folgende Merkmale aufweist:
eine Energieabsorptionseinrichtung (630) zum Aufnehmen einer Aufprallenergie mit einem ersten Energiebetrag, der größer als ein zweiter Energiebetrag der Aufprallenergie ist, bei dem das Deformationselement (610) durch die Matrize (620) deformierbar ist; und
eine Betätigungseinrichtung (640), die ausgebildet ist, um in Abhängigkeit von dem Energiebetrag der Aufprallenergie eine Bewegbarkeit der Energieabsorptionseinrichtung (630) relativ zu der Matrize (620) einzustellen, um das Deformationselement (610) und/oder die Energieabsorptionseinrichtung (630) zum Aufnehmen der Aufprallenergie freizugeben.

2. Vorrichtung (550) gemäß Anspruch 1, **dadurch gekennzeichnet, dass** die Energieabsorptionseinrichtung (630) in der Vorschubrichtung (680) bezüglich der Matrize (620) nachgelagert angeordnet oder anordenbar ist.

3. Vorrichtung (550) gemäß einem der vorangegangenen Ansprüche, wobei das Deformationselement (610) durch Verjüngen des Deformationselements (610) plastisch deformierbar ist, **dadurch gekennzeichnet, dass** die Energieabsorptionseinrichtung (630) zumindest ein Faltelement aufweist, das ausgebildet ist, um zum Aufnehmen der Aufprallenergie durch das Deformationselement (610) plastisch zusammenfaltbar oder plastisch entfaltbar zu sein.

4. Vorrichtung (550) gemäß einem der vorangegangenen Ansprüche, **dadurch gekennzeichnet, dass** die Betätigungseinrichtung (640) ausgebildet ist, um zum Aufnehmen der Aufprallenergie durch das Deformationselement (610) und die Energieabsorptionseinrichtung (630) in einer ersten Betätigungsstellung die Energieabsorptionseinrichtung (630) relativ zu der Matrize (620) zu fixieren und zum Aufnehmen der Aufprallenergie durch das Deformationselement (610) in einer zweiten Betätigungsstellung die Energieabsorptionseinrichtung (630) relativ zu der Matrize (620) freizugeben.

5. Vorrichtung (550) gemäß einem der vorangegangenen Ansprüche, **dadurch gekennzeichnet, dass** die Energieabsorptionseinrichtung (630) an der Matrize (620) lösbar angebracht oder anbringbar ist.

6. Vorrichtung (550) gemäß einem der Ansprüche 1 bis 4, **gekennzeichnet durch** ein zweiteiliges Gehäuse mit einem ersten Gehäuseelement (650) und einem zweiten Gehäuseelement (660), die lösbar aneinander angebracht oder anbringbar sind, wobei die Matrize (620) ein Teil des ersten Gehäuseelements (650) ist und die Energieabsorptionseinrichtung (630) an dem zweiten Gehäuseelement (660) angebracht oder anbringbar ist.

7. Vorrichtung (550) gemäß einem der vorangegangenen Ansprüche, **gekennzeichnet durch** eine an dem Deformationselement (610) anbringbare oder angebrachte Sicherungseinrichtung (700), die ausgebildet ist, um das Deformationselement (610) gegen eine Bewegung aus der Matrize (620) heraus entgegen der Vorschubrichtung (680) zu sichern.

8. Verfahren (800) zum Einstellen einer Steifigkeit einer Vorrichtung (550) mit einstellbarer Steifigkeit zum Aufnehmen einer Aufprallenergie gemäß einem der vorangegangenen Ansprüche, wobei das Verfahren (800) den folgenden Schritt aufweist:
Ansteuern (820) der Betätigungseinrichtung (640) in Abhängigkeit von dem Energiebetrag der Aufprallenergie, um die Steifigkeit der Vorrichtung (550) einzustellen.

9. Steuergerät, das ausgebildet ist, um den Schritt des Verfahrens (800) gemäß Anspruch 8 durchzuführen.

10. Computer-Programmprodukt mit Programmcode zur Durchführung des Verfahrens (800) nach Anspruch 8, wenn das Programm auf einem Steuergerät ausgeführt wird.
